# EUROPEAN PATENT APPLICATION

(11) **EP 2 933 189 A1**
(43) Date of publication of application: **21.10.2015**
(21) Application number: 14305576.2
(22) Date of filing: 17.04.2014
(51) Int. Cl.: B64C 39/04

(54) **Motormount for a flying drone apparatus**

(71) Applicant: Puy du Fou International, 85590 Les Epesses (FR); ACT Lighting Design, 2520 Ranst (BE)
(72) Inventor: Buys, Koen, B-1981 HOFSTADE (BE); Meeus, Kobe, 3053 HAASRODE (BE)
(74) Representative: Novagraaf Technologies

(57) **Abstract**

A flying drone (1) adapted for supporting one or more payload elements, said flying drone (1) comprising a main body (2) forming a housing for command means, and several directional means (3), each of said directional means (3) comprising at least one motor device (31) combined with one propeller (32),
each directional means (3) being linked with the main body (2) by an arm (4), said arm (4) comprising a first extremity (41) connected to the main body (2) and a second extremity (42) connected to said directional means. The directional means (3) further comprise a motormount (10) adapted to break under a predetermined stress, said motormount (10) compring a first part (11) supporting the motor device (31) and a second part (12) connected to the second extremity (42).

## Description

### Field of the Invention

The present invention relates to flying drones, and notably to Vertical Take-Off Landing (VTOL) flying drones. The present invention relates more particularly but not exclusively to flying drones adapted for supporting one or more payload elements.

### Background

There is currently a tremendous development of technologies in the field of flying drones, also called Unmanned Aerial Vehicles (UAV). As is known, these flying drones comprise a main body forming a housing for command means, and several directional means. Each of directional means classicaly comprises at least one motor device combined with one propeller. For example, flying drones can comprise eight directional means regularly disposed around the main body. Conventionnally, flying drones further comprises autonomous power sources and positioning systems which are relatively expensive.

Such components make a flying drone relatively expensive and relatively fragile in view of potential risks it is exposed to, such as crashs. In fact, when a drone crash on the ground or hurt an obstacle, exposed pieces such as directional means or chipboards with positioning system can be damaged which is not satisfying for consumers because of the maintenance costs

Moreover, the time required to repair such flying drones when damaged is relatively significant because of the complexity of the pieces which have to be repaired or replaced which is not satisfying.

### Summary

To overcome at least one of the aforementioned drawbacks, an object of this invention is a flying drone adapted for supporting one or more payload elements, said flying drone comprising a main body forming a housing for command means, and several directional means, each of said directional means comprising at least one motor device combined with one propeller, each directional means being linked with the main body by an arm, said arm comprising a first extremity connected to the main body and a second extremity connected to said directional means. According to the invention, the directional means comprise a motormount adapted to break under a predermined stress, said motormount compring a first part supporting the motor device and a second part connected to the second extremity.

In another embodiment of the invention, the motormount comprises a breaking area, said breaking area being located between the first part and the second part, said motormount being adapted to break under a predermined stress at the breaking area.

The motormount may break on the breaking area under a stress comprised between 70kN and 100kN.

Advantageously, the motormount may break on the breaking area under a stress of about 85kN.

In another embodiment of the invention, the motormount is made in plastic.

In another embodiment of the invention, the motormount is made by three dimensional printing.

In another embodiment, the motormount may have a length comprised between 80mm and 110mm.

Advantageously, the second part has a tubular shape.

The first part may comprise a circular shaped portion adapted to support the motor device.

### Brief Description of the Figures

Some embodiments of the flying drone in accordance with embodiments of the present invention are now described, by way of example only, and with reference to the accompagnying drawings, in which :
- The Figure 1 schematically illustrates a entire flying drone according to an embodiment of the invention,
- The Figure 2 schematically illustrates a partial view of a directional means, according to the embodiment of figure 1,
- The Figure 3 schematically illustrates an alternative of a motormount, according to an other embodiment of the invention, and
- The Figure 4 schematically illustrates an other alternative of a motormount, according to an other embodiment of the invention.

### Description of Embodiments

Hereafter is notably disclosed a flying drone adapted for supporting one ore more payload elements.

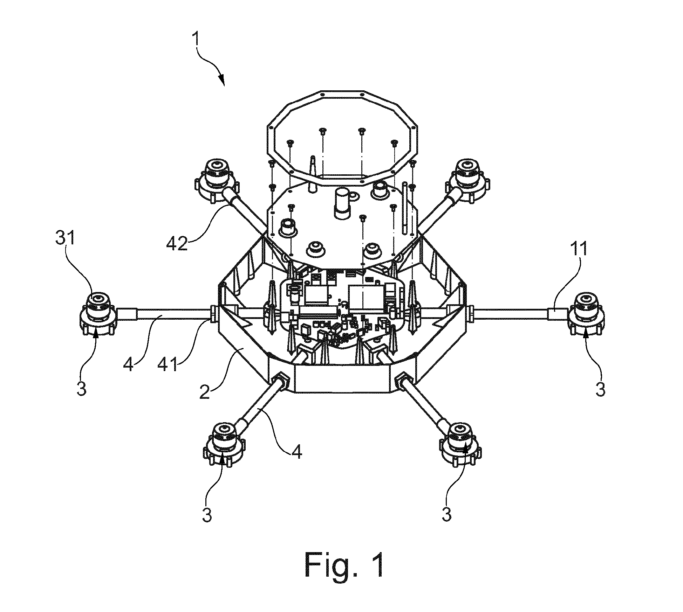

As shown in figure 1, the flying drone 1 comprises a main body 2 forming a housing for command means, and several directional means 3. In the exemplary embodiment of figure 1, the flying drone comprises six directional means.

Besides, each of directional means 3 comprise at least one motor device 31 combined with one propeller (not shown).

Each directional means 3 is linked with the main body 2 by an arm comprising a first extremity 41 connected to the main body 2 and a second extremity 42 connected to the directional means 3.

According to an embodiment the invention, the directional means 3 comprise a motormount 10 adapted to break under a predermined stress. According to an embodiment of the invention, the motormount breaks under a stress comprised between 70kN and 100kN. More particularly, and according to an other embodiment of the invention, the motormount breaks under a stress of about 85kN.

The fact that the motormount is adapted to break under a predetermined stress creates a protection for the expensive components of the flying drone such as motor device or other electronic devices as positioning systems, chipboards, ...

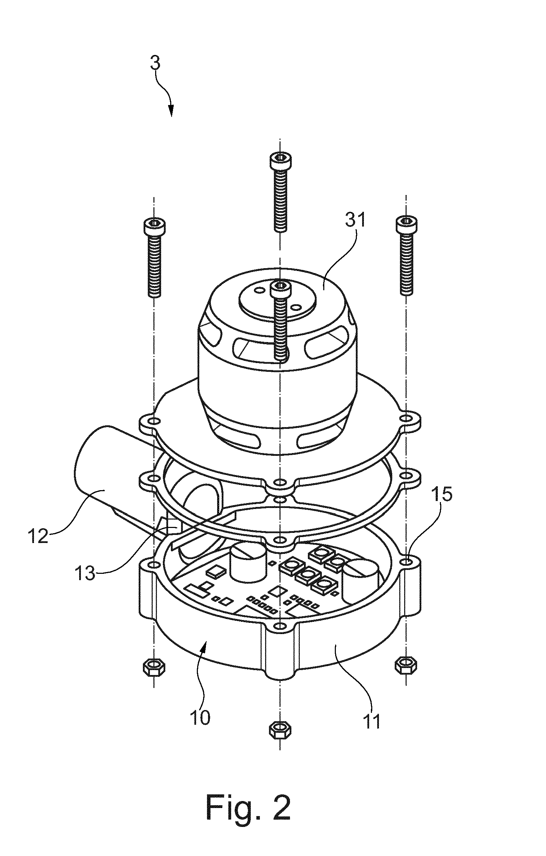

Hereafter are disclosed, with reference to figures 2 to figure 4, three different embodiments of the invention.

In the embodiment illustrated in figure 2, the motormount 10 comprises a first part 11 supporting the motor device 31 and a second part 12 connected to the second extremity 42.

Furthermore, the motormount 10 comprises a breaking area 13. This breaking area 13 is located between the first part 11 and the second part 12 and is adapted so that the motormount 10 may break under a predermined stress at the breaking area 13. Such a breaking area allows to not damage the arm because the area connected of the motormount 10 connected to the area may stay entire. Moreover, this breaking area allows to not damage the motor device.

As already explained, the motormount 10 may breaks, for example as a consequence of a crash, on the breaking area 13 under a stress comprised between 70kN and 100kN. On an embodiment, the motormount 10 may break on the breaking area 13 under a stress of about 85kN.

The second part 12 of the motormount 10 presents, in this embodiment, a tubular shape so that it can be connected easily to his corresponding arm 4. However, in other embodiments, it could present a different shape, for example a tubular shape with reinforcement fins on the outside.

For its part, the first part 11 of the motormount 10 comprises a circular shaped portion adapted to support the motor device 31. The motor device 31 can be screwed to the first part 11, for example on four angle 15 of this circular shaped portion, and the propeller may be superimposed onto the motodrive device 31.

Furthermore, the circular shaped portion of the first part 11 can form a housing adapted to house a chip or other devices as shown in figure 2.

In this embodiment, motormount 10 has a length comprised between 80mm and 110mm. However, the length of the motormount can vary, depending on the size of the flying drone and the size of the directional means.

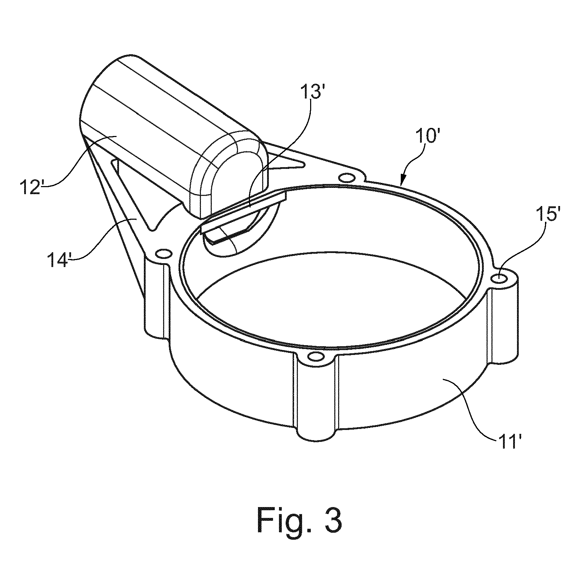

In an other embodiment illustrated in figure 3, the motormount 10' comprises a first part 11', a second part 12', and a breaking area 13'. Those different components of the motormount are sensibly similar to the components of the motormount shown in figure 2.

The main difference between the motormount 10 shwon in figure 2 and the motormount 10' shown in figure 3 consists in the fact that the motormount 10' comprises reinforcing means 14'. In this embodiment, reinforcing means take the form of two hollowed squares disposed on either sides of the first part 11' and the second part 12', those squares being also connected to the first and the second parts.

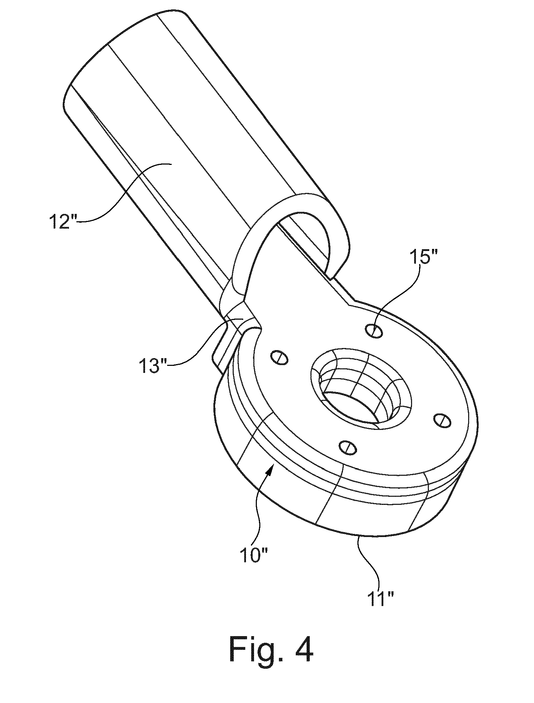

In the embodiment illustrated in figure 4, the motormount 10" comprises a first part 11" which comprises a circular shaped portion. Contrary to the circular shaped portion of the two other embodiments shown in figures 2 and 3, this circular shaped portion is flat. In other words, the circular shaped portion does not form a housing. In this case, and as illustrated, the screw holes can be positioned on the circular flat portion.

The motormount 10" further comprises a second part 12" which presenting a tubular shape, and a breaking area 13" located between first part 11" and second part 12".

According to an aspect of the invention, the motormounts of the different embodiments are made by three dimensional printing and are constituted of plastic.

This way of building allows facility of maintenance and low costs because of the speed of manufacturing and replacement of such a piece. Moreover, such a piece is low cost and makes a protection against too important stress on expensive components of flying drones such as motor device, propellers, positioning systems, ...

## Claims

1. Flying drone (1) adapted for supporting one or more payload elements, said flying drone (1) comprising a main body (2) forming a housing for command means, and several directional means (3), each of said directional means (3) comprising at least one motor device (31) combined with one propeller,
each directional means (3) being linked with the main body (2) by an arm (4), said arm (4) comprising a first extremity (41) connected to the main body (2) and a second extremity (42) connected to said directional means, **characterized in that** the directional means (3) comprise a motormount (10) adapted to break under a predetermined stress, said motormount (10) comprising a first part (11) supporting the motor device (31) and a second part (12) connected to the second extremity (42).

2. Flying drone according to claim 1, wherein said motormount (10) comprises a breaking area (13), said breaking area (13) being located between the first part (11) and the second part (12), said motormount (10) being adapted to break under a predermined stress at the breaking area (13).

3. Flying drone, according to either of claim 1 or 2, wherein said motormount (10) breaks on the breaking area (13) under a stress comprised between 70kN and 100kN.

4. Flying drone, according to claim 3, wherein said motormount (10) breaks on the breaking area (13) under a stress of about 85kN.

5. Flying drone, according to any of preceding claims, wherein said motormount (10) is made in plastic.

6. Flying drone, according to any of preceding claims, wherein said motormount (10) is made by three dimensional printing.

7. Flying drone, according to any of preceding claims, wherein said motormount (10) have a length comprised between 80mm and 110mm.

8. Flying drone, according to any of preceding claims, wherein said second part (12) has a tubular shape.

9. Flying drone, according to any of preceding claims, wherein said first part (11) comprises a circular shaped portion adapted to support the motor device (31).
